# EUROPÄISCHE PATENTSCHRIFT

(11) **EP 2 386 092 B1**
(45) Veröffentlichungstag und Bekanntmachung des Hinweises auf die Patenterteilung: **05.03.2014**
(21) Anmeldenummer: 09760822.8
(22) Anmeldetag: 20.11.2009
(51) Int. Cl.: G06K 9/00

(54) **VORRICHTUNG, VERFAHREN UND COMPUTERPROGRAMM ZUM BILDBASIERTEN ZÄHLEN VON OBJEKTEN, DIE EINE ZÄHLSTRECKE IN EINER VORGEGEBENEN RICHTUNG DURCHSCHREITEN**
DEVICE, METHOD, AND COMPUTER FOR IMAGE-BASED COUNTING OF OBJECTS PASSING THROUGH A COUNTING SECTION IN A PRESCRIBED DIRECTION
DISPOSITIF, PROCÉDÉ ET ORDINATEUR POUR LE COMPTAGE BASÉ SUR DES IMAGES D'OBJETS QUI PARCOURENT UN TRONÇON DE COMPTAGE DANS UNE DIRECTION PRÉDÉFINIE

(30) Priorität: 13.01.2009 DE 102009000173
(43) Veröffentlichungstag der Anmeldung: 16.11.2011
(73) Patentinhaber: Robert Bosch GmbH, 70442 Stuttgart (DE)
(72) Erfinder: EBLING, Julia, 31139 Hildesheim (DE); KRUEGER, Christof, 37073 Goettingen (DE); WARZELHAN, Jan Karl, 31135 Hildesheim (DE)
(86) Internationale Anmeldenummer: PCT/EP2009/065516
(87) Internationale Veröffentlichungsnummer: WO 2010/081577

(56) Entgegenhaltungen:
- EP-A2- 0 700 017
- DE-A1-102006 053 286
- DE-A1-102007 031 302
- GB-A- 2 337 146
- US-A- 4 249 207

## Beschreibung

### Standder Technik

Die Erfindung betrifft eine Vorrichtung zum Zählen von Objekten in einem Überwachungsbereich mit einem Zählmodul, wobei das Zählmodul einen Objektzähler umfasst, der im Mittel um einen Zählwert erhöht wird, wenn eines der Objekte als Zählobjekt eine Zählstrecke in einer Zählrichtung vollständig durchläuft, mit mindestens einer Überwachungskamera zur Erfassung des Übervvachungsbereichs, wobei die Überwachungskamera zur Ausgabe eines Bilddatenstroms des Überwachungsbereichs ausgebildet ist, und mit einem Extraktionsmodul, welches in einem aktuellen Bild des Bilddatenstroms zur Extraktion von bewegten Bildbereichen ausgebildet ist, und wobei die bewegten Bildbereiche die Objekte oder Teilabschnitte davon repräsentieren können. Die Erfindung betrifft auch ein Verfahren zum Zählen von.

Für Betreiber von öffentlichen oder gewerblichen Gebäuden, wie zum Beispiel Supermärkte, ist es interessant zu erfahren, wie viele Personen, insbesondere potenzielle Käufer, tagtäglich das Gebäude betreten. Auch in anderen Bereichen werden ein- und austretende, bewegte Objekte gezählt: So ist es zum Beispiel üblich, dass Autos, welche in ein Parkhaus ein- bzw. ausfahren, gezählt werden.

Je nach Anwendungsgebiet haben sich verschiedene Vorrichtungen zur Zählung durchgesetzt: So ist es in dem Parkhaus beispielsweise möglich, die Autos über eine berührungslose Induktionsmessung zu erfassen. In Supermärkten können die Käufer dagegen mittels einfacher Lichtschranken gezählt werden, die einen Zähler ansteuern, wenn sie unterbrochen werden. Bei den genannten Vorgehensweisen können jedoch nur vereinzelte, bewegte Objekte detektiert werden, ferner erlauben diese Messmethoden keine Aussagen über die Richtung des bewegten Objekts. Ein weiterer Schwachpunkt der Lichtschrankenmethode ist es, dass die Lichtschranke durch stationäre Objekte behindert werden kann.

Mittels Videoüberwachungssystemen erscheint es ebenfalls möglich, bewegte Objekte zu zählen. Derartige Videoüberwachungssystem umfassen üblicherweise eine Mehrzahl von Kameras, welche auf einen Übervvachungsbereich gerichtet sind, wobei die Bilddatenströme der Kameras in einer Überwachungszentrale zur manuellen oder automatisierten Kontrolle zusammengeführt werden. Es ist zum Beispiel bekannt, bewegte Objekte über einen gewissen Zeitraum zu verfolgen, wobei die Anzahl der verfolgten Objekte eine Zählung dieser bewegten Objekte darstellt. Am besten funktionieren die Videoüberwachungssysteme, wenn die bewegten Objekte gut gegeneinander abgegrenzt werden können. Im Gegenschluss bedeutet das für videogestützte Überwachungsmethoden, dass die Objekte im Kamerabild sich nicht überdecken oder nicht zu nahe aneinander grenzen sollen. Insbesondere bei stark bevölkerten Szenen kann es aufgrund derartiger Überdeckungen von bewegten Objekten zu Fehlauswertungen kommen.

Die Druckschrift DE 10 2006 053 286 A1 beschreibt ein Verfahren zur Detektion von bewegungsauffälligen Bildbereichen, wobei ein aktuelles optisches Flussfeld in einer Bildersequenz berechnet wird und mit einem Referenzflussfeld, welches die Hauptflussrichtungen von Bildbereichen der abgebildeten Szene umfasst, verglichen wird, wobei aus Bildbereichen der Szene, deren Bewegungsvektoren abweichend zu den Hauptflussrichtungen ausgerichtet sind, ein Gegenflussfeld mit Bewegungsvektoren von bewegungsauffälligen Bildbereichen gebildet wird.

In der Druckschrift DE 10 2007 031302 A1 wird eine Vorrichtung zur Erkennung und/oder Klassifizierung von einem Bewegungsmuster in einer Bildsequenz von einer Überwachungsszene mit einer Vielzahl von bewegten Objekten mit einer Schnittstelle zur Einspielung der Bildsequenz, mit einem Berechnungsmodul zur Bestimmung eines optischen Flussfeldes in der Überwachungsszene durch Auswertung der Bildsequenz und mit einem Erkennungsmodul, welches programmtechnisch und/oder schaltungstechnisch ausgebildet ist, das optische Flussfeld und/oder Teilbereiche davon mit einem oder mehreren Mustern zu vergleichen, um das Bewegungsmuster in der Bildsequenz zu erkennen, vorgeschlagen.

In der Druckschrift US 4,249207 A wird ein automatisches, videobasiertes Einbruchsdetektionssystem offenbart, wobei ein Bild eines Überwachungsbereichs in eine Mehrzahl von Zellen unterteilt wird und die Zellen separat untersucht werden, um einen Einbruch zu detektieren.

Die Druckschrift EP 0700017 A2, die wohl den nächstkommenden Stand der Technik bildet, betrifft ein Verfahren zum direktionalen Zählen von sich bewegenden Objekten bei einer vorgeschriebenen Überwachungssollstelle.

### Offenbarung der Erfindung

Im Rahmen der Erfindung wird eine Vorrichtung mit den Merkmalen des Anspruchs 1 und ein Verfahren mit den Merkmalen des Anspruchs vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Vorrichtung zum Zählen von Objekten in einem Überwachungsbereich vorgeschlagen wobei ein Objektzähler im Mittel um einen Zählwert erhöht wird, wenn eines der Objekte als Zählobjekt eine Zählstrecke (6) in einer Zählrichtung (4) vollständig durchläuft. Der Überwachungsbereich kann beliebig ausgebildet sein, so kann es sich beispielsweise um einen öffentlichen Platz, einen Eingangsbereich zu einem Gebäude, einen Innenbereich eines Gebäudes etc. handeln. Vorzugsweise ist die Vorrichtung als ein Videoüberwachungssystem ausgebildet.

Die Vorrichtung umfasst ein Zählmodul mit einem Objektzähler, wobei das Zählmodul ausgebildet ist, dass der Objektzähler im Mittel bzw. durchschnittlich um einen Zählwert erhöht wird, wenn eines der Objekte als Zählobjekt eine Zählstrecke in einer Zählrichtung vollständig durchläuft bzw. durchlaufen hat. Beispielsweise wird die Zählstrecke durch die Verbindung eines Eingangsbereichs und eines Ausgangsbereichs in dem Überwachungsbereich definiert. Die Zählstrecke und/oder die Zählrichtung kann wahlweise in dem Umgebungsbereich oder in Bildkoordinaten definiert werden. Die Festlegung der Zählrichtung erlaubt es insbesondere, zwischen bewegten Objekten, die sich in eine Richtung der Zählstrecke, und bewegten Objekten, die sich in der Gegenrichtung bewegen, zu unterscheiden. Der Zählwert, also das Inkrement des Objektzählers, ist vorzugsweise 1, so dass der Objektzähler jeweils um den Wert 1 erhöht wird, wenn ein Objekt die Zählstrecke in Zählrichtung vollständig durchlaufen hat.

Die Vorrichtung umfasst mindestens eine Überwachungskamera, welche zur Erfassung des Überwachungsbereichs geeignet und/oder ausgebildet, insbesondere angeordnet, ist, wobei die mindestens eine Überwachungskamera die Ausgabe eines Bilddatenstromes des Überwachungsbereichs erlaubt. Der Bilddatenstrom ist vorzugsweise als eine Sequenz aufeinanderfolgender Bilder ausgebildet. Die Überwachungskamera ist vorzugsweise als eine Videokamera ausgebildet, welche im sichtbaren Längenwellenbereich arbeitet. Alternativ hierzu kann die Überwachungskamera jedoch auch als eine Wärmebildkamera oder eine UV-Kamera realisiert sein. Hinsichtlich des optischen Aufbaus kann die Überwachungskamera eine maßstabsgetreue oder eine verzerrte Abbildung des Überwachungsbereichs liefern, so kann die Überwachungskamera beispielsweise auch als eine 360°-Kamera oder Fischaugen-Kamera ausgebildet sein. Die Übervwachungskamera kann z.B. in einer sogenannte Birds-Eye-View-Position angeordnet sein, wobei die Überwachungskamera von oben auf den Überwachungsbereich blickt, oder in einer Wide-Angle-View-Position, wobei die Überwachungskamera mehr von oben-vorne auf den Überwachungsbereich gerichtet ist.

Ferner umfasst die Vorrichtung ein Extraktionsmodul, welches in einem aktuellen Bild des Bilddatenstroms bewegte Bildbereiche, also Bildbereiche, welche Objekte repräsentieren, die sich in dem Überwachungsbereich bewegen, extrahiert. Vorzugsweise werden die bewegten Bildbereiche durch einen Vergleich des aktuellen Bildes mit einem oder mehreren vorhergehenden Bildern des Bilddatenstroms ermittelt. Insbesondere werden ergänzend zur Extraktion der bewegten Bildbereiche Bewegungsdaten zu den Bildbereichen und somit zu den den Bildbereichen zugeordneten Objekten ermittelt.

Erfindungsgemäß wird vorgeschlagen, dass das Zählmodul ausgebildet ist, bei jedem aktuellen Bild, welches durch das Extraktionsmodul bearbeitet wurde, für einen der bewegten Bildbereiche, dessen Bewegungsrichtung der Zählrichtung entspricht und somit ein mögliches Zählobjekt oder einen Teilabschnitt davon repräsentiert, den Objektzähler um einen Teilwert zu erhöhen, wobei der Teilwert kleiner als der Zählwert ist.

Der Objektzähler wird somit bildweise nur um einen Bruchteil des Zählwerts erhöht, wenn die Analyse des aktuellen Bilds ergibt, dass sich ein Objekt als Zählobjekt entlang der Zählstrecke in Zählrichtung bewegt.

Statt dem klassischen Ansatz der Bildverarbeitung, ein Objekt zu detektieren, über einen gewissen Zeitraum und somit über eine Bildersequenz zu verfolgen und danach zu überprüfen, ob dieses Objekt die Zählstrecke in Zählrichtung durchlaufen hat, wird erfindungsgemäß ein neuer Ansatz gewählt. Gerade in stark bevölkerten Szenen (crowded scenes) kann es zu falschen Zuordnungen des Objekts oder zu einem Verschwinden des Objekts während der Verfolgung kommen. Um diese möglichen Fehlerquellen auszuschließen, erfolgt erfindungsgemäß die Auswertung bildweise, wobei der Objektzähler um einen Teilwert erhöht wird, sobald ein Bildbereich festgestellt wird, dessen zugeordnetes Objekt ein Zählobjekt darstellt. Nach der Erhöhung des Objektzählers um den Teilwert wird das nächste Bild als aktuelles Bild behandelt.

Für den Fall, dass das Objekt die Zählstrecke in Zählrichtung vollständig durchläuft, sollte in jedem Bild der entsprechende Bildbereich detektiert werden können und sich somit die Teilwerte insgesamt zu dem Zählwert akkumulieren.

Besondere Vorteile bietet die Vorrichtung jedoch auch für den Fall, wenn das Objekte während des Durchlaufens der Zähtstrecke in Zählrichtung z.B. aufgrund einer Verdeckung oder Verschmelzung mit einem weiteren Objekt verloren geht: Ohne weitere Kompensation wird dieses Zählobjekt dann zumindest anteilig als Zählwert berücksichtigt, so dass beispielsweise statt dem Zählwert 1 nur der Zählwert 0,8 erfasst wird und die Zählung zumindest richtiger ist, als das Objekt vollständig zu ignorieren. Optional kann vorgesehen sein, dass ein derartiger Fehler mit statistischen Mitteln kompensiert wird, so dass beispielsweise die Vorrichtung ausgelegt ist, bereits bei einer 80%-igen Erfassung den Objektzähler um den Zählwert 1 zu erhöhen. Allgemein formuliert wird optional ein Korrekturfaktor auf den Teilwert angewendet, der Fehler aufgrund von Verdeckungen und/oder Verschmelzungen von Objekten kompensiert. Auf diese Weise ist zwar kein exaktes Zählen möglich, es ergibt sich jedoch eine sehr sichere und stabile, statistische Aussage über die Anzahl der gezählten Objekte.

Vorzugsweise wird dieses systematisch auftretende Abweichung mit Hilfe einer Offline- und/oder Onlinekalibrierung korrigiert, wobei bei der Offlinekalibrierung aus "Ground-Truth"-Daten also Bildsequenzen, für die die exakte Anzahl an Personen in Zählrichtung bekannt ist, vorweg der Korrekturfaktor abgeleitet wird. Bei der Onlinekalibrierung kann dieser Korrekturfaktor durch Hinzunahme eines zusätzlichen Trackingmoduls adaptiv angepasst werden.

Mögliche Vorteile der Erfindung sind, dass das Zählen von Objekten aus jeder erdenklichen Kameraposition ermöglicht wird und dass die Vorrichtung auch bei stark belebten oder bevölkerten Szenen, wie zum Beispiel an Bahnhöfen, auf Flughäfen oder sonstigen öffentlichen Plätzen, erfolgreich eingesetzt werden kann.

Bei der Erfindung weist das Extraktionsmodul ein Flussmodul auf, welches zur Bestimmung eines optischen Flussfeldes mit Flussvektoren ausgebildet ist. Der optische Fluss (optical flow) wird vorzugsweise durch einen Vergleich des aktuellen Bildes mit einem oder mehreren vorhergehenden Bildern des Bilddatenstroms durchgeführt und erzeugt ein Vektorfeld, wobei jedem Pixel ein Verschiebevektor und/oder ein Geschwindigkeitsvektor zugeordnet ist, der die relative Verschiebung des Bildinhaltes des Pixels gegenüber einem oder mehreren vorhergehenden Bildern beschreibt. Bildbereiche, deren Flussvektoren keine nennenswerte Länge aufweisen, sind somit als Abbildungen stationärer Elemente in dem Überwachungsbereich zu werten. Bildbereiche mit größeren Flussvektoren betreffen bewegte Objekte in dem Überwachungsbereich, welche potenzielle Zählobjekte darstellen können.

Besonders bevorzugt ist das Zählmodul ausgebildet, für jedes neue und/oder aktualisierte Flussfeld, welches einen Bildbereich aufweist, dessen zugeordnete Bewegungsrichtung gleichgerichtet mit der Zählrichtung ist und/oder ein mögliches Zählobjekt repräsentiert, einen Teilwert aufzusummieren. Diese Ausgestaltung unterstreicht nochmals die erfinderische Idee, eine bildweise Auswertung des Bilddatenstromes durchzuführen. Vorzugsweise ist vorgesehen, dass die Zählobjekte - zumindest im Rahmen der Auswertung durch das Zählmodul - unindividualisiert und/oder unverfolgt und/oder anonymisiert sind und/oder behandelt werden.

Bei der Erfindung wird in Abhängigkeit der Bewegungsrichtung und/oder - geschwindigkeit des bewegten Bildbereiches bzw. des korrespondieren Zählobjektes eine Teilstrecke der Zählstrecke abgeschätzt, die das korrespondierende Zählobjekt in dem aktuellen Bild im Vergleich zu einem vorhergehenden Bild zurückgelegt hat.

Im Rahmen der Erfindung ist es optional möglich, neben der Zählrichtung einen Toleranzbereich für die Zählrichtung festzulegen, da davon auszugehen ist, dass sich die Zählobjekte nicht exakt parallel zu der Zählrichtung bewegen. Zählobjekte, welche sich in dem Toleranzbereich befinden, legen jedoch einen längeren Weg als die Weglänge der Zählstrecke zurück. Um mögliche, daraus resultierende Abweichungen zu kompensieren, wird auf Basis der Bewegungsrichtung und der zurückgelegten Strecke abgeschätzt, welche korrespondierende Teilstrecke das Zählobjekt auf der Zählstrecke zurückgelegt hat. Beispielsweise kann diese Abschätzung durch eine Projektion der Flussvektoren auf die Zählrichtung und/oder auf die Zählstrecke erfolgen.

Bei der Erfindung ist vorgesehen, dass die Größe des Teilwertes in Abhängigkeit der zurückgelegten Teilstrecke, wie sie beispielsweise durch die Projektion auf die Zählrichtung bzw. Zählstrecke ermittelt wurde, und optional ergänzend der Fläche des Teilbereiches des Zählobjektes bestimmt wird. Dieser Ausgestaltung liegt die Überlegung zugrunde, dass ein sich schnell durch die Zählstrecke bewegendes Objekt pro Bild des Bilddatenstroms einen größeren Weg auf der Zählstrecke zurücklegt als ein sich langsam bewegendes Objekt und dementsprechend der Teilwert bei dem schnell bewegenden Objekt größer sein muss als bei dem langsamen, um bei einem vollständigen Durchlauf durch die Zählstrecke den Zählwert zu erhalten.

Bei einer bevorzugten Weiterbildung der Erfindung umfasst die Vorrichtung ein Segmentierungsmodul, welches die bewegten Bildbereiche und/oder die Flussbereiche in Objektbereiche segmentiert. Liefert beispielsweise der verwendete Optical-Flow-Algorithmus kein dichtes Vektorfeld, wird dieses durch ein geeignetes Interpolationsverfahren zunächst verdichtet und zusammengefasst. Durch eine Segmentierung ist es auch möglich, zu kleine Objekte (zum Beispiel bewegte Blätter oder dergleichen) effektiv zu eliminieren, indem Objektbereiche unter einer vorgebbaren Größe verworfen werden.

Bei einer möglichen Weiterbildung der Erfindung weist die Vorrichtung eine Objektidentifikationseinrichtung auf, welche zur Identifikation der Objektklasse der segmentierten Objektbereiche und/oder der bewegten Bildbereiche ausgebildet ist. Durch eine derartige Objektidentifikationseinrichtung kann festgestellt werden, ob der jeweilige segmentierte Objektbereich bzw. Bilderbereich ein Objekt betrifft, welches gezählt werden soll. Auf diese Weise ist zum einen möglich, gezielt bestimmte Objekte zu zählen, zum Beispiel Personen mit Einkaufswagen gegenüber Personen ohne Einkaufswagen abzugrenzen, zum anderen ist es möglich, Fehlobjekte auszuschließen.

Mit Hilfe der Objektidentifikationseinrichtung ergibt sich bei möglichen Ausgestaltungen für das aktuell betrachtete Bild eine Menge von identifizierten Objekten samt ihrer Position und Ausdehnung. Für jedes dieser Objekte kann die momentane Bewegungsrichtung und/oder -geschwindigkeit aus dem bereits berechneten optischen Flussfeld hergeleitet werden. Die Projektion des momentanen Bewegungsvektors auf die Zählrichtung ergibt für jedes Objekt eine Länge, die die Teilstrecke der Zählstrecke bildet.

Ein weiterer Gegenstand der Erfindung betrifft ein Verfahren zum Zählen, insbesondere zum gerichteten Zählen, von Objekten in einem Überwachungsbereich mit den Merkmalen des Anspruches 6, welches auf einer Vorrichtung, wie sie soeben beschrieben wurde bzw. nach einem der vorhergehenden Ansprüche, durchgeführt wird. Gleichermaßen ist die Vorrichtung vorzugsweise zur Durchführung des Verfahrens gemäß des Anspruchs 6 ausgebildet. Bei dem Verfahren ist vorgesehen, dass aus einem aktuellen Bild des Übervvachungsbereiches bewegte Bildbereiche extrahiert werden und dass bei einem der bewegten Bildbereiche, dessen Bewegungsrichtung der Zählrichtung entspricht und somit ein mögliches Zählobjekt oder einen Teilabschnitt davon repräsentiert, der Objektzähler um einen Teilwert erhöht wird, wobei der Teilwert kleiner als der Zählwert ist.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
- Figur 1: eine schematische Blockdarstellung einer Vorrichtung zum Zählen von Objekten als ein Ausführungsbeispiel der Erfindung;
- Figur 2: ein Kamerabild aus der Vorrichtung gemäß Figur 1 in verschiedenen Verarbeitungsstufen zur Illustration eines Ausführungsbeispiels des Verfahrens gemäß der Erfindung.

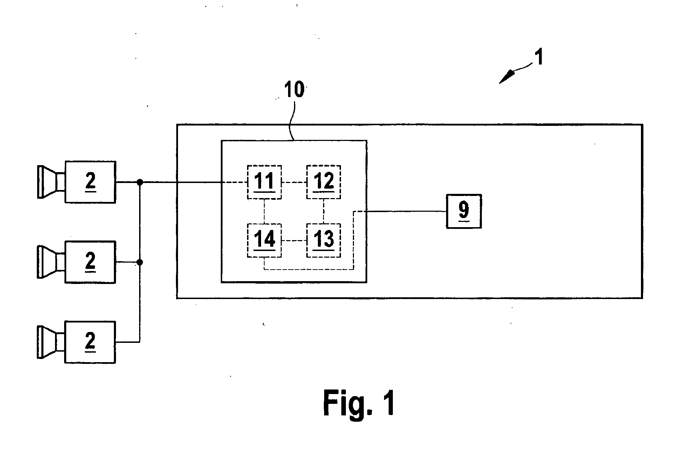

Die Figur 1 zeigt in einer schematischen Blockdarstellung eine Zählvorrichtung 1, welche für ein Zählen von bewegten Objekten in Überwachungsbereichen ausgebildet ist. Die Zählvorrichtung 1 umfasst eine oder mehrere Überwachungskameras 2, welche auf den Überwachungsbereich gerichtet sind.

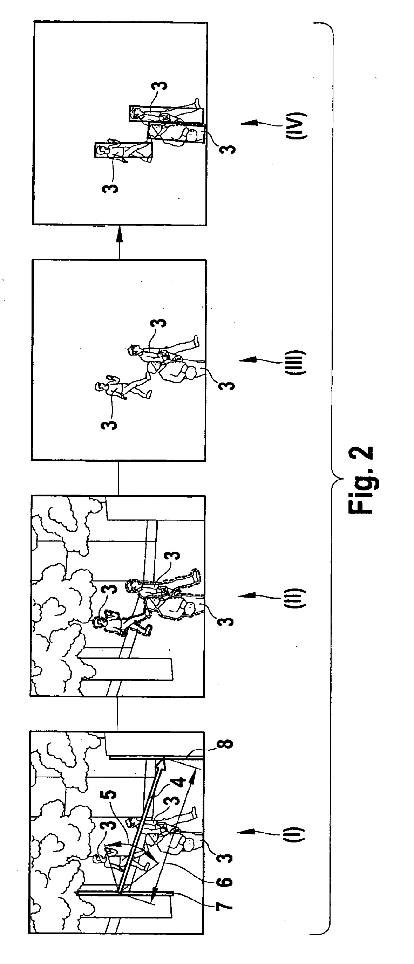

In der Figur 2, welche ein beispielhaftes Kamerabild bei verschiedenen Verfahrensschritten zur Illustration eines Ausführungsbeispiels des erfindungsgemäßen Verfahrens zeigt, ist unter (I) ein Kamerabild abgebildet, das einen typischen Überwachungsbereich - in diesem Fall eine Straßenszene - zeigt. In der Straßenszene sind drei Personen 3 dargestellt, welche sich in dem Bild (I) von links nach rechts bewegen.

In einem ersten Schritt gibt der Benutzer eine Zählrichtung 4 inklusive einem Toleranzwinkel 5 und eine Zählstrecke 6 vor. Die Zählrichtung 4 definiert zusammen mit dem Toleranzwinkel 5, in welche Richtung sich die Personen 3 bewegen müssen, um gezählt zu werden. Die Zählstrecke 6 gibt die Länge z.B. in Bildkoordinaten an, welche ein Objekt bzw. eine Person 3 vom Betreten bis zum Verlassen eines Bereiches des Bildes (I) zurücklegen muss, um gezählt zu werden. Somit werden entlang der Zählstrecke 6 die Personen 3 gezählt, die zwischen einem Szeneneintrittsbereich 7 und einem Szenenaustrittsbereich 8 vorhanden sind und sich in die Zählrichtung 4 bewegen. Nachdem eine der Personen 3 die Zählstrecke 6 vollständig in der richtigen Zählrichtung 4 zurückgelegt hat, wird in einem Zählmodul 9 (Figur 1) der Akkumulatorwert eines Objektzählers um einen Zählwert, z.B. um den Wert 1, insgesamt erhöht.

Zur Durchführung der Zählung wird zunächst das durch eine der Überwachungskameras 2 aufgenommene, aktuelle Bild an die Zählvorrichtung 1 übergeben, wobei nachfolgend in einem Extraktionsmodul 10 bewegte Bildbereiche in dem aktuellen Bild mit ergänzenden Bewegungsrichtungsinformationen extrahiert werden. Diese bewegten Bildbereiche sind in der Figur 2 in dem Bild (II) mit einer gestrichelten Linie umschlossen und entsprechen den Personen 3.

Ein mögliches Ausführungsbeispiel zur Extraktion der bewegten Bildbereiche ist in der Figur 1 gestrichelt dargestellt. Hierbei wird das aktuelle Bild an ein Flussmodul 11 übergeben, welches ausgebildet ist, in dem aktuellen Bild den optischen Fluss mit Flussvektoren zu bestimmen. Liefert der verwendete Optical-flow-Algorithmus kein dichtes Vektorfeld, wird dieses in einem Segmentierungsmodule 12 durch ein geeignetes Interpolationsverfahren zunächst verdichtet. Zur Visualisierung der Ergebnisse ist es optional möglich, bewegte Bildbereiche farblich zu codieren, wobei jeder Richtung ein anderer Farbton zugewiesen wird und wobei die Helligkeit die Länge des Flussvektors bestimmt.

In einem nachfolgenden Schritt wird eine binäre Maske erstellt, bei der diejenigen Bildpunkte gesetzt sind, deren zugehörige Bewegungsvektoren innerhalb des Toleranzwinkels 5 liegen. Das ursprüngliche Kamerabild wird mit der binären Maske kombiniert, so dass nur noch die bewegten Bildbereich der Personen 3 betrachtet werden, die eine zur vorgegebenen Zählvorrichtung 4 konforme Bewegungsrichtung aufweisen. Das Ergebnis dieses Schrittes ist in der Figur 2 in dem Bild (III) gezeigt.

In einem weiteren Schritt wird eine Objektdetektionseinrichtung 13 angewendet, die für jede Bildposition angibt, ob sich an dieser Stelle ein gesuchtes Objekt befindet. Hierbei sind verschiedenste Objektdetektoren denkbar, zum Beispiel für Autos, Personen etc. Abhängig vom Einsatzzweck können diese auf unterschiedlichen Merkmalen basieren. Bei Über-Kopf-Aufnahmen einer Menschenmenge eignet sich zum Beispiel ein Kopfdetektor sehr gut zur Personenerkennung. Mit Hilfe der Objektdetektionseinrichtung 13 ergibt sich für das aktuell betrachtete Bild eine Menge von Objekten samt ihrer Position und Ausdehnung, wie dies in Figur 2 im Bild (IV) dargestellt ist. Für jedes der Objekte wird nun die aktuelle Bewegungsrichtung und -geschwindigkeit aus dem bereits berechneten optischen Flussfeld hergeleitet.

Die Projektion des momentanen Bewegungsvektors des Objekts auf die Zählrichtung 4 ergibt für jedes Objekt eine Länge einer Teilstrecke, die durch die gesamte Länge der Zählstrecke 6 geteilt auf den Objektzähler als ein Teilwert für das aktuelle Bild aufsummiert wird. Somit wird in diesem Schritt ein Bruchteil des Zählwerts als Teilwert auf den Akkumulatorwert des Objektzähler addiert. Die Abschätzung der Teilstrecke bzw. des Teilwerts erfolgt in einem Schätzmodul 14.

Vom Szeneneintritt 7 bis zum -austritt 8 betrachtet, erhöhen die bildweisen Beobachtungen eines einzigen Objektes, welches sich in Zählrichtung 4 bewegt, den Akkumulatorwert des Objektzählers somit insgesamt um 1, so dass das Objekt richtig gezählt ist.

Für den Fall, dass statistisch auftretenden Fehler kompensiert werden sollen, kann ein Korrekturwert berechnet werden, der den Teilwert je nach statistischen Fehlern nach oben bzw. nach unten korrigiert. Bei einer ersten Möglichkeit kann der Korrekturwert durch bekannte Daten ermittelt werden, bei einer anderen Möglichkeit kann der Korrekturfaktor durch Hinzunahme eines zusätzlichen Tracking-Moduls adaptiv angepasst werden. Beispielsweise kann vorgesehen sein, dass die Zählvorrichtung sich während einfacher Szenen kalibriert.

Zusammenfassend wird durch die Vorrichtung bzw. durch das Verfahren erreicht, dass mit Hilfe der Berechnung des optischen Flusses und optional durch den Einsatz von Objektdetektoren ein gerichtetes Zählen für stark bevölkerte Szenen ermöglicht wird. Der Vorteil ist insbesondere darin zu sehen, dass auf ein Tracking bzw. eine Verfolgung von Objekten von Bild zu Bild verzichtet wird und statt dessen eine Aufsummierung von bildweisen Beobachtungen von Objektbewegungen in Zählrichtung verwendet wird. Dafür wird ein Objektzähler verwendet, der für jedes erkannte Objekt die anteilige Bewegung pro Bild in Zählrichtung 4 aufsummiert.

## Patentansprüche

1. Vorrichtung (1) zum Zählen von Objekten in einem Überwachungsbereich,
mit einem Zählmodul (9), wobei das Zählmodul den Objektzähler umfasst, der im Mittel um einen Zählwert erhöht wird, wenn eines der Objekte als Zählobjekt die Zählstrecke (6) in der Zählrichtung (4) vollständig durchläuft,
mit mindestens einer Überwachungskamera (2) zur Erfassung des Überwachungsbereichs, wobei die Überwachungskamera (2) zur Ausgabe eines Bilddatenstroms des Überwachungsbereichs ausgebildet ist,
mit einem Extraktionsmodul (10), welches zur Extraktion von bewegten Bildbereichen in einem aktuellen Bild des Bilddatenstroms ausgebildet ist, wobei die bewegten Bildbereiche die Objekte oder Teitabschnitte davon repräsentieren können,
wobei das Zählmodul (9) ausgebildet ist, bei jedem aktuellen Bild für einen der bewegten Bildbereiche (3), dessen Bewegungsrichtung der Zählrichtung (4) entspricht und somit ein mögliches Zählobjekt oder einen Teilabschnitt davon repräsentiert, den Objektzähler (9) um einen Teilwert zu erhöhen,
wobei der Teilwert kleiner als der Zählwert ist,
**dadurch gekennzeichnet, dass**
das Extraktionsmodul (10) zur Extraktion der bewegten Bildbereiche in dem aktuellen Bild ein Flussmodul (11) aufweist, welches zur Bestimmung eines optischen Flussfelds mit Flussvektoren ausgebildet ist, und durch ein Schätzmodul (14), das in Abhängigkeit der Bewegungsrichtung und/oder-geschwindigkeit des bewegten Bildbereichs eine Teilstrecke der Zählstrecke (6) abschätzt, welche das korrespondierende Zählobjekt in dem aktuellen Bild zurückgelegt hat. wobei die Schätzung der Teilstrecke durch eine Projektion der Flussvektoren auf die Zählrichtung (4) und/oder auf die Zählstrecke (6) erfolgt und wobei die Größe des Teilwerts in Abhängigkeit der zurückgelegten Teilstrecke des Zählobjekts bestimmt wird.

2. Vorrichtung (1) nach Anspruch 1 oder 2, **gekennzeichnet durch** ein Segmentierungsmodul (12), welches die bewegten Bildbereiche und/oder die Flussbereiche in Objektbereiche segmentiert.

3. Vorrichtung (1) nach Anspruch 3, **gekennzeichnet durch** eine Objektidentifikationseinrichtung (13), welche zur Identifikation der Objektklasse der segmentierten Objektbereiche ausgebildet ist.

4. Vorrichtung (1) nach Anspruch 3 oder 4, **dadurch gekennzeichnet, dass** dem segmentierten Objektbereich die Teilstrecke zugeordnet wird.

5. Verfahren zum Zählen von Objekten in einem Überwachungsbereich in einer Zählrichtung (4) entlang einer Zählstrecke (6) mit einer Vorrichtung (1) nach einem der vorhergehenden Ansprüche.

## Claims

1. Apparatus (1) for counting objects in a surveillance region, having a counting module (9), the counting module including the object counter, which is increased on average by one counting value when one of the objects completely traverses the counting section (6) in the counting direction (4) as object to be counted, having at least one surveillance camera (2) for recording the surveillance region, the surveillance camera (2) being designed to output an image data stream of the surveillance region, and having an extraction module (10) which is designed to extract moving image regions in a current image of the image data stream, the moving image regions being able to represent the objects or segments thereof, the counting module (9) being designed to increase the object counter (9) by a partial value in the case of each current image for one of the moving image regions (3) whose direction of movement corresponds to the counting direction (4) and thus represents a possible object to be counted or a segment thereof, the partial value being smaller than the counting value, **characterized in that** in order to extract the moving image regions in the current image the extraction module (10) has a flow module (11) which is designed to determine an optical flow field with flow vectors, and also has an estimating module (14) which estimates, as a function of the direction and/or speed of movement of the moving image region, a subsection of the counting section (6) which the corresponding object to be counted has covered in the current image, the estimation of the subsection being performed by a projection of the flow vectors onto the counting direction (4) and/or onto the counting section (6), and the multitude of the partial value being determined as a function of the subsection of the object to be counted that has been covered.

2. Apparatus (1) according to Claim 1 or 2, **characterized by** a segmentation module (12) which segments the moving image regions and/or the flow regions in object regions.

3. Apparatus (1) according to Claim 3, **characterized by** an object identification device (13) which is designed to identify the object class of the segmented object regions.

4. Apparatus (1) according to Claim 3 or 4, **characterized in that** the subsection is assigned to the segmented object region.

5. Method for counting objects in a surveillance region in a counting direction (4) along a counting section (6) with the aid of an apparatus (1) according to one of the preceding claims.

## Revendications

1. Dispositif (1) pour compter des objets dans une zone de surveillance,
comprenant un module de comptage (9), le module de comptage incluant le compteur d'objets qui est incrémenté en moyenne d'une valeur de comptage lorsque l'un des objets traverse entièrement la distance de comptage (6) dans le sens de comptage (4) en tant qu'objet compté,
comprenant au moins une caméra de surveillance (2) pour couvrir la zone de surveillance, la caméra de surveillance (2) étant configurée pour délivrer un flux de données d'image de la zone de surveillance, comprenant un module d'extraction (10) qui est configuré pour l'extraction de zones d'image mobiles dans une image actuelle du flux de données d'image, les zones d'image mobiles pouvant représenter les objets ou des portions partielles de ceux-ci,
le module de comptage (9) étant configuré, lors de chaque image actuelle de l'une des zones d'image (3) mobiles dont le sens de déplacement correspond au sens de comptage (4) et représente ainsi un objet compté possible ou une portion partielle de celui-ci, pour incrémenter le compteur d'objets (9) d'une valeur partielle, la valeur partielle étant inférieure à la valeur de comptage,
**caractérisé en ce que**
le module d'extraction (10) présente un module de flux (11) pour l'extraction des zones d'image mobiles dans l'image actuelle, lequel est configuré pour déterminer un champ de flux optique avec des vecteurs de flux, et présente en outre un module d'estimation (14) qui, en fonction du sens et/ou de la vitesse de déplacement de la zone d'image mobile, estime une distance partielle de la distance de comptage (6) qui a été parcourue par l'objet compté correspondant dans l'image actuelle, l'estimation de la distance partielle étant effectuée par une projection des vecteurs de flux sur le sens de comptage (4) et/ou sur la distance de comptage (6) et la grandeur de la valeur partielle étant déterminée en fonction de la distance partielle parcourue de l'objet compté.

2. Dispositif (1) selon la revendication 1 ou 2, **caractérisé par** un module de segmentation (12) qui segmente les zones d'image mobiles et/ou les zones de flux en zones d'objet.

3. Dispositif (1) selon la revendication 3, **caractérisé par** un système d'identification d'objet (13) qui est configuré pour l'identification de la classe d'objet des zones d'objet segmentées.

4. Dispositif (1) selon la revendication 3 ou 4, **caractérisé en ce que** la distance partielle est associée à la zone d'objet segmentée.

5. Procédé de comptage d'objets dans une zone de surveillance dans un sens de comptage (4) le long d'une distance de comptage (6) avec un dispositif (1) selon l'une des revendications précédentes.
